# EUROPÄISCHE PATENTANMELDUNG

(11) **EP 0 533 613 A2**
(43) Veröffentlichungstag der Anmeldung: **24.03.1993**
(21) Anmeldenummer: 92710022.2
(22) Anmeldetag: 22.07.1992
(51) Int. Cl.: F23N 1/00, G05D 16/20

(54) **Servo-Gasdruckregler**

(30) Priorität: 22.07.1991 AT 1460/91
(71) Anmelder: Joh. Vaillant GmbH u. Co., D-42810 Remscheid (DE)
(72) Erfinder: Friedrichs, Detlef, W-5609 Hückeswagen (DE)
(74) Vertreter: Heim, Johann-Ludwig, Dipl.-Ing.

(57) **Zusammenfassung**

Servo-Gasdruckregler mit einem ersten Ventilsitz (34) und einem von einer ersten Membran (6) gesteuerten ersten Ventilkörper (5), der eine Gasleitung (1) zu einem in einer Brennkammer (37) angeordneten Gasbrenner (35) beherrscht und von einer Rückstellkraft beaufschlagt ist und mit einem von einer zweiten von einem Elektromagneten (29) beaufschlagten Membran (16) gesteuerten zweiten Ventilkörper (18), der in einer weiteren Gasleitung (15) angeordnet ist, die von einer Membrankammer (22) der ersten Membran (6) ausgeht und in der zweiten Membrankammer (7) dieser Membran (16) endet, die mit der zum Brenner (35) führenden Gasleitung (7) verbunden ist, mündet, wobei eine dritte Membran (40) vorgesehen ist, und daß der Raum (30) zwischen der zweiten und der dritten Membran mit der Brennkammer (37) über eine Leitung verbunden ist.

## Beschreibung

Die Erfindung bezieht sich auf einen Servo-Gasdruckregler mit einem ersten Ventilsitz und einem von einer ersten Membran gesteuerten ersten Ventilkörper, der eine Gasleitung zu einem in einer Brennkammer angeordneten Gasbrenner beherrscht und von einer Rückstellkraft beaufschlagt ist und mit einem von einer zweiten von einem Elektromagneten beaufschlagten Membran gesteuerten zweiten Ventilkörper, der in einer weiteren Gasleitung angeordnet ist, die von einer Membrankammer der ersten Membran ausgeht und in der zweiten Membrankammer dieser Membran endet, die mit der zum Brenner führenden Gasleitung verbunden ist, mündet.

Ein solcher Druckregler wurde zum Beispiel durch die EU-B1 39 000 bekannt. Bei dieser bekannten Lösung ist die mit dem Anker verbundene Stange in einer Stopfbuchse dicht hindurchgeführt und das den Elektromagnetantrieb aufnehmende Gehäuse entlüftet. Dadurch ergibt sich jedoch der Nachteil, daß durch die Stopfbuchse eine erhebliche Reibung bedingt ist, so daß der Elektromagnetantrieb entsprechend kräftig ausgebildet sein muß, um eine Bewegung der Stange sicherstellen zu können. Weiterhin ergibt sich ein Hysteresefehler aufgrund der mechanischen Reibung und der magnetischen Remanenz. Schließt man einen solchen Druckregler an ein Gebläsegerät an, so versagt die Regelfunktion wegen des fehlenden Unterdruckes.

Ziel der Erfindung ist es, diese Nachteile zu vermeiden und einen Druckregler der eingangs erwähnten Art vorzuschlagen, bei dem die Reibung durch die Stopfbuchse entfällt.

Erfindungsgemäß wird dies dadurch erreicht, daß eine dritte Membran vorgesehen ist und daß der Raum zwischen der zweiten und der dritten Membran mit der Brennkammer über eine Leitung verbunden ist.

Durch diese Maßnahmen wird erreicht, daß auf eine Stopfbuchse verzichtet werden kann, da eben der Raum des Druckreglers, der mit dem Innenraum der Brennkammer verbunden ist, abgedichtet ist. Dabei beeinflußt der in der Brennkammer herrschende Druck die Stellung des zweiten Ventilkörpers und damit in weiterer Folge die Stellung des in der zum Gasbrenner führenden Leitung angeordneten ersten Ventilkörpers, der die Gaszufuhr zum Brenner steuert.

Nach einer anderen Variante der Erfindung kann bei einem Servo-Gasdruckregler der eingangs erwähnten Art vorgesehen sein, daß der Ventilkörper des zweiten Ventiles mit einer Stange in das Gehäuse des Elektromagneten geführt ist, das gasdruckdicht allseits geschlossen ist, und daß der von der zweiten Membran und dem von der Stange des Elektromagneten durchsetzten Gehäuseteil begrenzte Raum mit der Brennkammer über eine Leitung verbunden ist.

Bei dieser Lösung ergibt sich ein abgedichteter Raum, der durch die Membrane des Druckreglers, dessen dem den Elektromagnetantrieb aufnehmenden Gehäuse zugekehrten Gehäuseteil und das den gesamten Elektromagnetantrieb aufnehmende Gehäuse gebildet ist. Dabei ergibt sich eine Entlüftung des den Elektromagnetantrieb aufnehmenden Gehäuses über die Brennkammer, so daß sich keine Behinderung der Bewegung des Ankers des Elektromagnetantriebes und damit der Stange ergibt.

Bei der erstgenannten Variante kann weiter vorgesehen sein, daß das den Elektromagnetantrieb aufnehmende Gehäuse eine gegebenenfalls durch einen mit dessen Anker verbundenen Ventilkörper verschließbare Entlüftungsöffnung versehen ist.

Auf diese Weise ergibt sich eine entsprechende Entlüftung des den Elektromagnetantrieb aufnehmenden Gehäuses, so daß dieser unbehindert die mit der Membrane des Druckreglers über die Feder einwirkende Stange bewegen kann. Dabei kann auf eine dichte Verbindung des den Elektromagnetantrieb aufnehmenden Gehäuses mit dem Gehäuse des Druckreglers verzichtet werden.

Weiter kann vorgesehen sein, daß das den Elektromagnetantrieb aufnehmende Gehäuse zweiteilig ausgebildet ist, wobei die beiden Teile miteinander verschraubt sind und der eine die Spule des Elektromagnetantriebes aufnehmende Teil dieses Gehäuses mit dem Gehäuse des Druckreglers verschraubt ist und der zweite Teil des den Elektromagnetantrieb aufnehmenden Gehäuses einen den Öffnungsweg des Ankers des Elektromagnetantrieb begrenzenden Anschlags aufweist.

Durch diese Maßnahmen ist es möglich, die Kennlinie des Druckreglers durch Verdrehung des den Elektroantrieb aufnehmenden Gehäuses beziehungsweise dessen beider Teile zu verändern, wodurch dieser an die jeweiligen Verhältnisse angepaßt werden kann.

Die Erfindung wird nun anhand der Zeichnung näher erläutert.

Dabei zeigen:

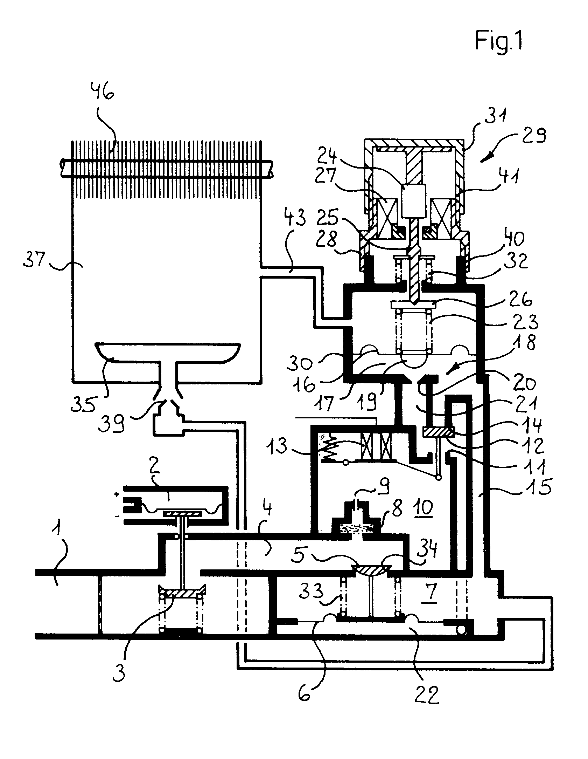

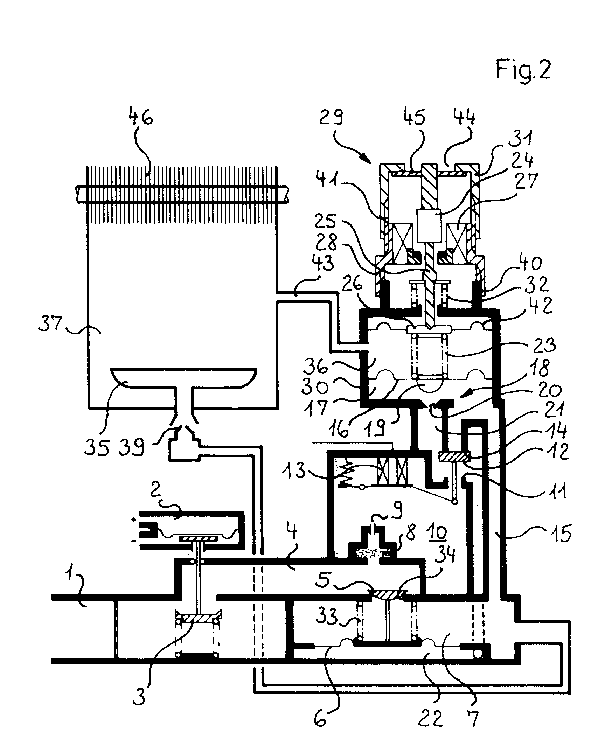

Figuren 1 und 2 zwei verschiedene Ausführungsformen erfindungsgemäßer Druckregler.

Bei der Ausführungsform nach der Figur 1 ist in der Gaszuleitung 1 ein von einem Druckschalter 2 gesteuertes Ventil 3 angeordnet, das den Zustrom von Gas in eine Einlaßkammer 4 steuert. Diese ist über ein von einer Membrane 6 gesteuertes mit einem Ventilsitz 34 versehenes Ventil 5, das von einer Rückstellfeder 33 beherrscht ist, mit einer Auslaßkammer 7 verbunden.

Die Einlaßkammer 4 ist über einen Filter 8 und eine Drossel 9 mit einer Kammer 10 verbunden, die eine mit einem Ventilsitz 11 versehene Öffnung aufweist, der mit einem Ventilkörper 12 eines Schaltmagneten 13 zusammenwirkt. Dieser Schaltmagnet 13 beziehungsweise dessen Ventilkörper 12 wirkt noch mit einem weiteren Ventilsitz 14 zusammen, der eine Öffnung einer mit der Auslaßkammer 7 verbundenen Steuerleitung 15 begrenzt. Diese Steuerleitung 15 führt weiter zu einem von der Membrane 16 des Druckreglers begrenzten Raum 17, der weiter über ein Steuerventil 18, dessen Ventilkörper 19 mit einem Ventilsitz 20 zusammenwirkt, der eine Öffnung des Raumes 17 begrenzt, die diesen mit einer Steuerleitung 21 verbindet, die in den von der Membrane 6 der Einlaßkammer 4 abgetrennten Steuerkammer 22 führt.

Auf die Membrane 16 wirkt weiter eine Feder 23 ein, die an dem Anker 24 eines Elektromagnetantriebes über eine Stange 25 und einen Federteller 26 abgestützt ist. Die Spule 27 ist in einem Teil 28 eines den Elektromagnetantrieb 24, 27 aufnehmenden Gehäuses 29 gehalten, der über ein Gewinde 40 mit dem Gehäuse 30 des Druckreglers verbunden und daher gegenüber diesem und damit der Membrane 16 verstellbar gehalten ist.

Der zweite Teil 31 des Gehäuses 29 ist mit dem ersten Teil 28 ebenfalls verschraubt 41 und daher gegenüber diesem verstellbar gehalten. Dabei sind die Gewinde 40 zur Verbindung des Gehäuses 30 mit dem den Elektromagnetantrieb 24, 27 aufnehmenden Gehäuse 29 und das die beiden Teile 28, 31 des Gehäuses 29 verbindende Gewinde 41 abgedichtet. Dies kann zum Beispiel nach der Einstellung der gegenseitigen Lage dieser Teile mittels eines anaerob härtenden Klebers erfolgen. Weiter kann die Abdichtung aber auch durch Einlegen elastisch verformbarer Dichtungen erfolgen.

Bei der in der Figur 1 dargestellten Ausführungsform ist das Gehäuse 29, das den Elektromagnetantrieb 24, 27 aufnimmt, dicht ausgeführt, wobei der Teil 31 dieses Gehäuses 29 gleichzeitig als Anschlag für die mit dem Anker 24 des Elektromagnetantriebes verbundene Stange 25 dient, der den Öffnungsweg des Ankers 24 begrenzt, der von der Rückstellfeder 32 beaufschlagt ist.

In der Ruhestellung verschließt der Schaltmagnet 13 beziehungsweise dessen Ventilkörper 12 die Kammer 10. Dadurch ergeben sich über die Auslaßkammer 7 und die Steuerleitungen 15 und 21 an beiden Seiten der Membrane 6 gleiche Druckverhältnisse, so daß die Feder 33, die die Membrane 6 nach unten drückt und damit den Ventilkörper 5 gegen den Ventilsitz 34 drückt und damit ein Abströmen des Gases aus der Einlaßkammer 4 weitgehend unterbindet.

Nach dem Umschalten des Schaltmagneten 13 beziehungsweise dessen Ventilkörpers 11 wird die Verbindung der Kammer 9 mit der Steuerleitung 21 geöffnet und die Verbindung der Steuerleitung 21 mit der Steuerleitung 15 unterbunden.

Dadurch kann Gas über die Drossel 9, den Raum 10, den Ventilsitz 11 und die Steuerleitung 21 in die Steuerkammer 22 einströmen, wodurch der Ventilkörper 5 entgegen der Kraft der Feder 33 vom Ventilsitz 34 abgehoben wird und das Gas in die Auslaßkammer 7 einströmen kann und von dort über eine Gasdüse 39 zum Brenner 35 strömen kann.

Die Membrane 16 wird an ihrer Unterseite vom Auslaßgasdruck, der von dem zwischen dem Ventilsitz 34 und dem Ventilkörper 5 verbleibenden Spalt abhängt, beaufschlagt und hat daher die Tendenz, sich nach oben zu wölben und damit das Ventil 17 zu öffnen. Dem wirkt die Feder 23 entgegen, die je nach der an dem Elektromagnetantrieb 24, 27 anliegenden Spannung die Membrane 16 des Druckreglers entgegen den Auslaßgasdruck mehr oder weniger beaufschlagt.

Es stellt sich daher ein entsprechender Gleichgewichtszustand ein, in dem das Ventil 18 um ein gewisses Maß geöffnet ist, so daß über dieses Ventil Gas aus der Kammer 10 und der Steuerkammer 22, letzteres über die Steuerleitung 21 in den Raum 17 einströmen und von dort zur Auslaßkammer 7 strömen kann. Dies bewirkt ein Absinken des Druckes in der Steuerkammer 22 und damit eine Schließbewegung des Ventilkörpers 4. Letzteres hat zur Folge, daß der Druck in der Einlaßkammer 6 und damit auch in der Kammer 10 und in weiterer Folge auch in der Steuerkammer 22 steigt, was zu einer Öffnungsbewegung des Ventilkörpers 5 führt. Es stellt sich somit ein Gleichgewichtszustand ein, der von der Stellung des Ventiles 18 abhängt, das seinerseits von der an dem Elektromagnetantrieb 24, 27 anliegenden Spannung abhängt, der die Stellung des Ankers 24 und mit diesem des Federtellers 26 und damit die Vorspannung der Membrane 16 ändert, wobei der Ventilkörper 19 und der Ventilsitz 20 eine Drosselstelle bilden.

Bei dem in der Figur 1 dargestellten Ausführungsbeispiel ist der von der Zuströmseite des Ventiles 18 abgekehrte Raum 36 des Druckreglers mit dem Inneren der den Gasbrenner 35 und einen Wärmetauscher 46 aufnehmenden Brennkammer 37 verbunden.

Dabei durchsetzt die Stange 25 das Gehäuse 30 des Druckreglers mit Spiel. Es ergibt sich daher, daß der Raum 36 mit dem Inneren des den Elektromagnetantrieb 24, 27 aufnehmenden Gehäuse 29 verbunden ist, das gegen die Umgebung, wie bereits erwähnt, abgedichtet ist. Dadurch ist dieser Raum gegen die Brennkammer 37 entlüftet, so daß die Bewegung des Ankers 24 und der Membrane 16 nicht behindert wird, wie dies bei einer Bewegung der Membrane 16 in einem vollkommen abgeschlossenen Raum der Fall wäre.

Die Ausführungsform nach der Figur 2 unterscheidet sich von jener nach der Figur 1 dadurch, daß der Federteller 26 der Stange 25 mit einer weiteren Membrane 42 verbunden ist, die den Raum 36 begrenzt und gegen die Umgebung abdichtet. Auch bei dieser Ausführungsform ist der Raum 36 mit dem Inneren der Brennkammer 37 über eine Leitung 43 verbunden.

Bei der Ausführungsform nach der Figur 2 durchsetzt die Stange 25 das Gehäuse 30 ebenfalls mit Spiel, doch ist eine Abdichtung des Gehäuses 29, das den Elektromagnetantrieb 24, 27 aufnimmt, gegen das Gehäuse 30 nicht erforderlich. Ebensowenig ist eine Abdichtung der beiden Teile 28 und 31 des Gehäuses 29 erforderlich.

So ist im Teil 31 eine Öffnung 44 vorgesehen, die in der Öffnungsstellung des Ankers 24 durch einen mit der Stange 25 verbundenen Ventilkörper 45 verschlossen ist und die bei Beginn der Bewegung des Ankers 24 geöffnet wird. Dadurch wird der die weitere Membrane 40 beeinflussende Raum entlüftet.

## Patentansprüche

1. Servo-Gasdruckregler mit einem ersten Ventilsitz (34) und einem von einer ersten Membran (6) gesteuerten ersten Ventilkörper (5), der eine Gasleitung (1) zu einem in einer Brennkammer (37) angeordneten Gasbrenner (35) beherrscht und von einer Rückstellkraft beaufschlagt ist und mit einem von einer zweiten von einem Elektromagneten (29) beaufschlagten Membran (16) gesteuerten zweiten Ventilkörper (18), der in einer weiteren Gasleitung (15) angeordnet ist, die von einer Membrankammer (22) der ersten Membran (6) ausgeht und in der zweiten Membrankammer (7) dieser Membran (16) endet, die mit der zum Brenner (35) führenden Gasleitung (7) verbunden ist, mündet, **dadurch gekennzeichnet**, daß eine dritte Membran (40) vorgesehen ist und daß der Raum (30) zwischen der zweiten und der dritten Membran mit der Brennkammer (37) über eine Leitung verbunden ist.

2. Servo-Gasdruckregler mit einem ersten Ventilsitz (34) und einem von einer ersten Membran (6) gesteuerten ersten Ventilkörper (5), der eine Gasleitung (1) zu einem in einer Brennkammer (37) angeordneten Gasbrenner (35) beherrscht und von einer Rückstellkraft beaufschlagt ist und mit einem von einer zweiten von einem Elektromagneten (29) beaufschlagten Membran (16) gesteuerten zweiten Ventilkörper (18), der in einer weiteren Gasleitung (15) angeordnet ist, die von einer Membrankammer (22) der ersten Membran (6) ausgeht und in der zweiten Membrankammer (7) dieser Membran (16) endet, die mit der zum Brenner (35) führenden Gasleitung (7) verbunden ist, mündet, **dadurch gekennzeichnet**, daß der Ventilkörper (18) des zweiten Ventiles mit einer Stange (25) in das Gehäuse (29) des Elektromagneten (27) geführt ist, das gasdruckdicht allseits geschlossen ist, und daß der von der zweiten Membran (16) und dem von der Stange (25) des Elektromagneten (27) durchsetzten Gehäuseteil begrenzte Raum (30) mit der Brennkammer über eine Leitung verbunden ist.

3. Servo-Gasdruckregler nach Anspruch 1, **dadurch gekennzeichnet**, daß das den Elektromagnetantrieb (24, 27) aufnehmende Gehäuse (29) eine gegebenenfalls durch einen mit dessen Anker (24) verbundenen Ventilkörper (42) verschließbare Entlüftungsöffnung (41) versehen ist.

4. Servo-Gasdruckregler nach einem der Ansprüche 1 bis 3, **dadurch gekennzeichnet**, daß das den Elektromagnetantrieb (24, 27) aufnehmende Gehäuse (29) zweiteilig ausgebildet ist, wobei die beiden Teile (28, 31) miteinander verschraubt sind und der eine die Spule (27) des Elektromagnetantriebes (24, 27) aufnehmende Teil (28) dieses Gehäuses (29) mit dem Gehäuse (30) des Druckreglers verschraubt ist und der zweite Teil des den Elektromagnetantrieb (24, 27) aufnehmenden Gehäuses (29) einen den Öffnungsweg des Ankers (24) des Elektromagnetantrieb (24, 27) begrenzenden Anschlag aufweist.
